# EUROPEAN PATENT APPLICATION

(11) **EP 0 743 138 A2**
(43) Date of publication of application: **20.11.1996**
(21) Application number: 96303518.3
(22) Date of filing: 17.05.1996
(51) Int. Cl.: B23Q 3/00

(54) **Auto tray changer**

(30) Priority: 18.05.1995 KR 9512331
(71) Applicant: DAEWOO ELECTRONICS CO., LTD, Seoul (KR)
(72) Inventor: Oh, Doo-Hwan, Video Research Center, Namdaemoon-Ro, Jung-Gu, Seoul (KR); Ham, Young-Suck, Video Research Center, Namdaemoon-Ro, Jung-Gu, Seoul (KR)
(74) Representative: Neobard, William John

(57) **Abstract**

An auto tray changer charges working pieces loaded in a plurality of trays into a numeric control machine one at a time and discharges worked pieces from the numeric control machine into the plurality of trays one at a time. The trays being stacked on a delivery means. The changer includes a cabinet having an injection chamber, a discharge chamber and a working chamber; an injection means for injecting the plurality of trays stacked on the delivery means into the injection chamber; a first lifting means for lifting the stacked trays in the injection chamber to the working chamber in such a way that a tray located on top of the stack is located at a clamping portion of the working chamber; a robot for charging the working pieces one at a time into the numeric control machine from the tray in the clamping portion in the working chamber and discharging the worked pieces into the same; a shifting means for shifting the tray reloaded with the worked pieces into a discharging portion of the working chamber located above an upper portion of the discharge chamber; a second lifting means for lowering the shifted tray into the discharge chamber in such a way that the trays loaded with worked pieces are stacked in a reverse order from the stacked trays; and a discharge means for discharging the stack of the trays loaded with the worked pieces into the delivering means.

## Description

The present invention relates to an auto tray changer; and, more particularly, to an auto tray changer capable of sequentially charging working pieces loaded in a plurality of trays, the trays being stacked on a delivery means, into a numeric control machine and sequentially discharging worked pieces from the numeric control machine into the plurality of trays so as to achieve a systematic working and manufacturing management.

As is well known, upper and lower drums for use in a video cassette recorder are produced by first dies casted into respective working pieces which are then put through a variety of machining processes such as a rough-cutting, a hole forming, a finishing, a washing, a tape buffing and a hard carbon film coating, until desired products, i.e., worked pieces, are obtained.

Usually, in the production of the drums, one numeric control machine sequentially performs all the necessary mechanical forming steps, and a production line therefor is set up in such a way that the working pieces are continuously supplied into the numeric control machine. The continuous supply of the working pieces is achieved through an auto tray changer which injects a tray loaded with working pieces into the numeric control machine, thereby continuously supplying the working pieces thereonto, loads the worked pieces into the tray, and then discharges the tray. The auto tray changer is conventionally provided with a conveyer system or a chain type buffer for performing the injection and then the discharge of the tray.

However, in the conveyer system or the chain type buffer, the initial injection and discharge of the trays are performed manually, which may inadvertently damage the working pieces or the worked pieces, entail fatigue on the worker and decrease the production efficiency.

Further, the conventional conveyer system or the chain type buffer takes up an excessive space for equipments and also requires separate trucks for transporting trays thereinto. In other words, it is difficult to achieve a systematic working and manufacturing management with the auto tray changer provided with the conveyer system or the chain type buffer.

In order to overcome the described shortcomings, an unmanned transporting truck may be employed and collectively controlled by a direct numerical control. However, the direct numerical control requires an excessive initial equipment investment. In addition, malfunction in any one of the numeric control machines may result in malfunctioning of the whole production line, entailing a decrease of the production efficiency thereof.

It is, therefore, a primary object of the invention to provide an auto tray changer, which is capable of sequentially charging working pieces loaded in a plurality of trays, the trays being stacked on a delivery means, into a numeric control machine one at a time and sequentially discharging worked pieces from the numeric control machine into the plurality of trays so as to achieve a systematic working and manufacturing management.

The above and other objects of the present invention are accomplished by providing an auto tray changer comprising:
a cabinet having an injection chamber, a discharge chamber and a working chamber;
an injection means for injecting the plurality of trays stacked on the delivery means into the injection chamber;
a first lifting means for lifting the stacked trays in the injection chamber to the working chamber in such a way that a tray located on top of the stack is located at a clamping portion of the working chamber;
a robot for sequentially charging the working pieces into the numeric control machine from the tray in the clamping portion in the working chamber and discharging the worked pieces into the same;
a shifting means for shifting the tray reloaded with the worked pieces into a discharging portion of the working chamber located above an upper portion of the discharge chamber;
a second lifting means for lowering the shifted tray into the discharge chamber in such a way that the trays loaded with worked pieces are stacked in a reverse order from the stacked trays; and
a discharge means for discharging the stack of the trays loaded with the worked pieces into the delivering means.

The above and other objects, features and advantages of the present invention will become apparent from the following detailed description of preferred embodiments taken in conjunction with the accompanying drawings, in which:
Fig. 1 shows a perspective view of an auto tray changer in accordance with the present invention;
Fig. 2 is a rear elevation perspective view of Fig. 1;
Fig. 3 presents a partial plan view of Fig. 2;
Fig. 4 is a partial front view of Fig. 1;
Fig. 5 provides a perspective view of a guide panel of the auto tray changer in accordance with the present invention;
Fig. 6 offers a partial perspective view of a conveyer system of the auto tray changer in accordance with the present invention;
Fig, 7 illustrates a perspective view of a main portion of an injection chamber and a discharge chamber of the auto tray changer in accordance with the present invention;
Fig. 8 explains a side sectional view of an injection means of the auto tray changer in accordance with the present invention;
Fig. 9 represents a side sectional view of a discharge means of the auto tray changer in accordance with the present invention;
Fig. 10 gives a perspective view of a working chamber of the auto tray changer in accordance with the present invention;
Fig. 11 depicts a plan view showing a clamping means of the auto tray changer in accordance with the present invention;
Fig. 12 is a side sectional view of Fig. 11;
Fig. 13 shows a sectional view taken along the line I-I of Fig. 11;
Fig. 14 sets forth a sectional view taken along the line II-II of Fig. 11;
Fig. 15 offers a side sectional view illustrating a robot of the auto tray changer in accordance with the present invention;
Fig. 16 is a front view showing a transporting means of the auto tray changer in accordance with the present invention;
Fig. 17 describes a perspective view of a preferred embodiment of a tray for use in the auto tray changer in accordance with the present invention;
Fig. 18 is a plan view of Fig. 17;
Fig. 19 is a front view of rig. 17;
Fig. 20 is a side sectional view of Fig. 17;
Fig. 21 is a partial sectional view taken along the line III-III of Fig. 17;
Fig. 22 is a sectional view of a stacked condition of the trays of Fig. 17;
Fig. 23 presents a perspective view of another preferred embodiment of the tray for use in the auto tray changer in accordance with the present invention;
Fig. 24 is a plan view of Fig. 23;
Fig. 25 is a front view of Fig. 23; and
Fig. 26 shows a sectional view of a stacked condition of the trays of Fig. 23.

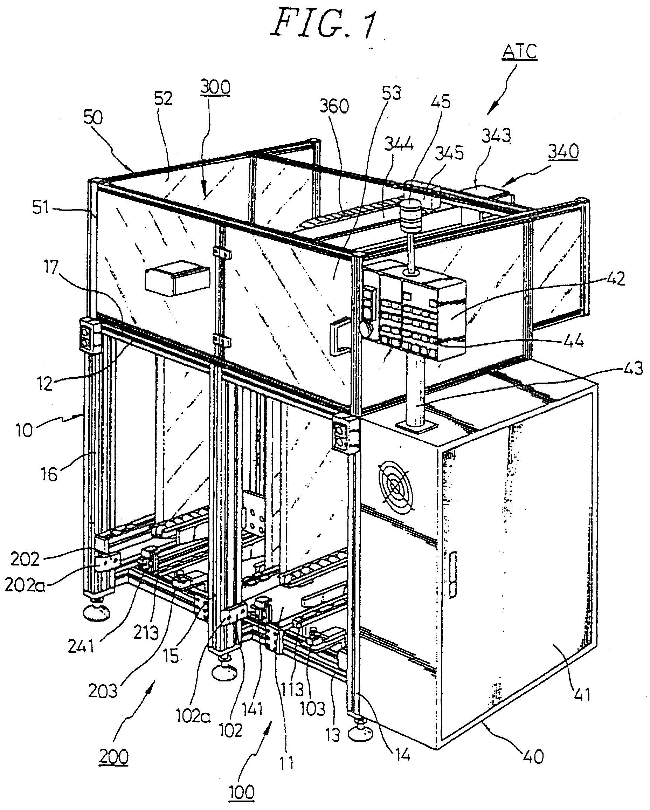

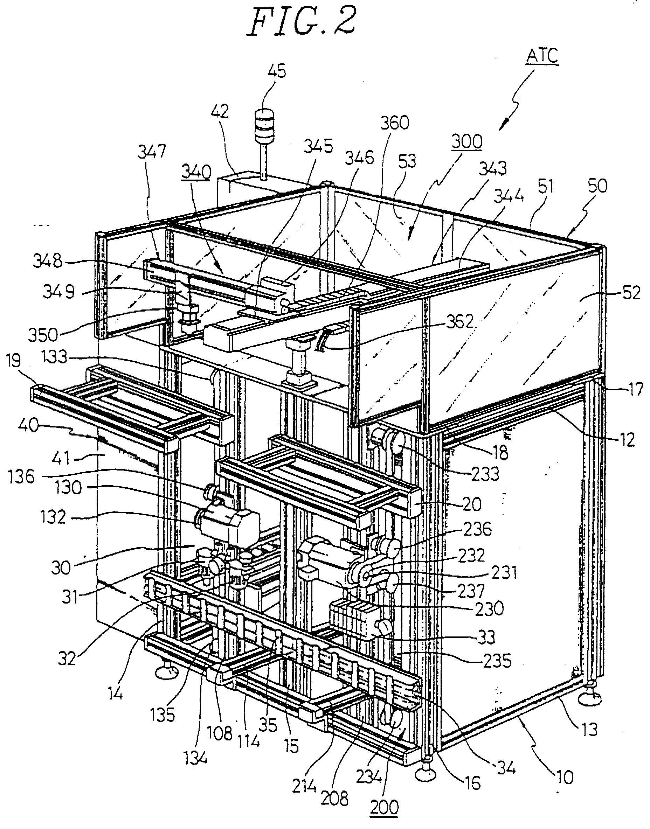

Referring to Figs. 1 and 2, there are shown an auto tray changer in accordance with the present invention. As shown, the auto tray changer("ATC") comprises a cabinet 10 having an injection chamber 100, a discharge chamber 200, and a working chamber 300, the injection and the discharge chambers being divided by a bottom plate 11, the working chamber 300 being formed above the injection and the discharge chambers 100 and 200.

The cabinet 10 includes an upper frame 12, a lower frame 13, three vertical frames 14, 15 and 16 connecting therebetween, and base plates 17 and 18 horizontally formed at the front and the rear portions of the upper frame 12. A pair of frames 19 and 20 are horizontally disposed on both sides of an upper portion of the rear of the cabinet 10, respectively. Further, a pneumatic supply unit 30 including a micro filter 31 for removing contaminants in the air, and a pressure controller 32 for maintaining a uniform operating pressure of the air in the micro filter 31 is provided at the lower portion of the rear of the cabinet 10.

A manifold unit 33 for controlling the air flow is connected to the pressure controller 32 by wires(not shown). Duct lines of the pneumatic supply unit 30, wires 34 such as tubes, hoses or cables, are arranged by a harness bracket 35 which is horizontally disposed on lower portions of the vertical frames 14, 15 and 16.

A control unit 40 is disposed on one side of the cabinet 10. The control unit 40 includes a control box 41 for mounting relevant parts such as a circuit board and a terminal, etc. Disposed on the upper portion of the control box 41 is a control panel 42 which is supported by a post 43.

The control panel 42 is provided with a function selecting buttom unit 44 for controlling the operation of the ATC in accordance with the present invention. A lamp 45 for indicating the operating condition of the ATC is disposed on the upper portion of the control panel 42.

On the other hand, the working chamber 300 is provided with a casing 50 so as to define the injection and the discharge chambers 100 and 200. The lower portion of the casing 50 is fixed on the base plates 17 and 18 of the cabinet 10. The casing 50 includes a chassis 51, a panel 52 made of a transparent material mounted in the chassis 51, and a door 53, through which the working condition in the working chamber 300 can be checked. The casing 50 is structured so that the upper and the rear surfaces thereof are opened.

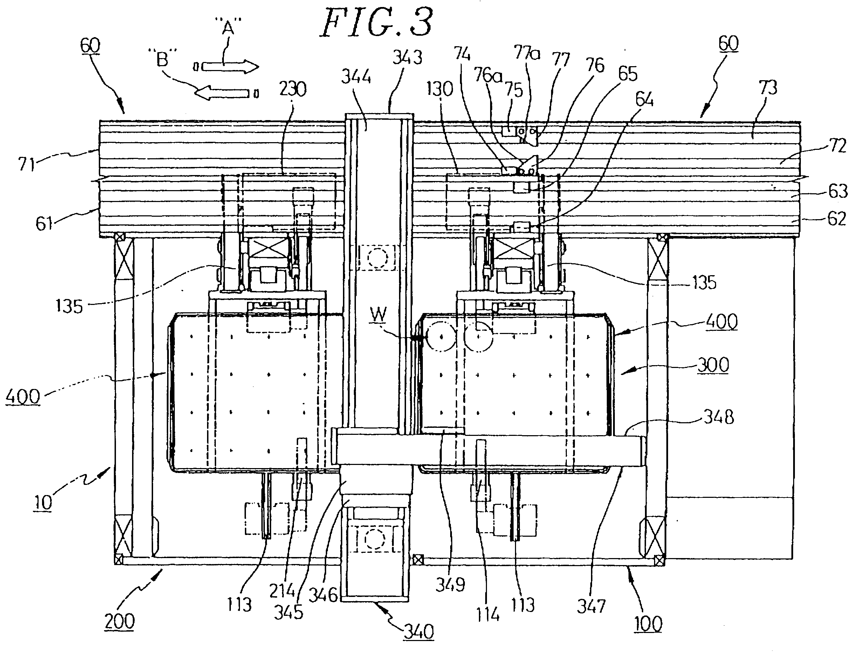

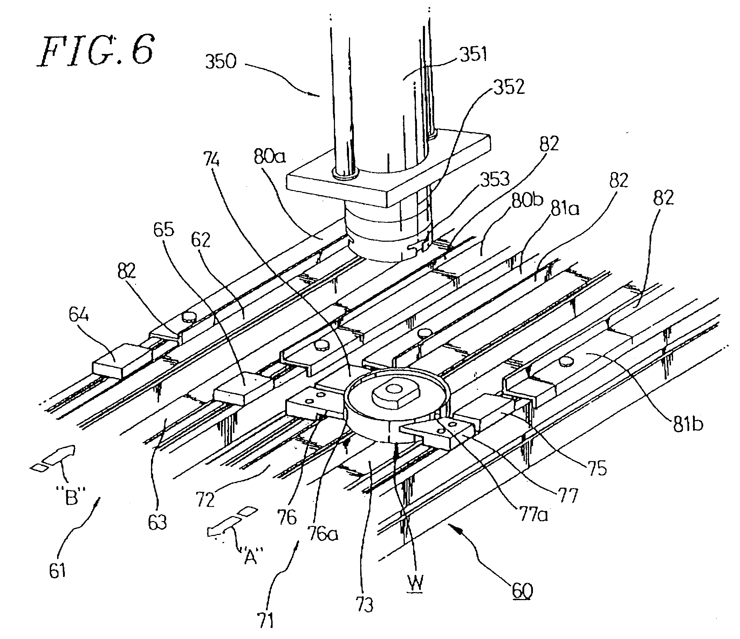

Referring to Figs. 3 and 6, there are shown a conveyer system 60 comprising a supply line 61 for supplying working pieces and a discharge line 71 for discharging worked pieces, respectively, the conveyer system being mounted on the upper portion of the frames 19 and 20.

Mounted on the supply and discharge lines 61 and 71 are one pair of belts 62, 63 and 72, 73, respectively, which are spaced at a predetermined distance to thereby lift the working pieces and the worked pieces, the belts being driven by a driving motor(not shown) and a pulley(not shown).

Further, the supply and discharge lines 61 and 71 are provided with one pair of sensors 64, 65 and 74, 75 capable of detecting the position of each of the working pieces W and the worked pieces, respectively. Each of the sensors 64, 65, 74 and 75 may employ a general photo coupler including an emitter and a receiver.

Furthermore, the discharge line 71 is provided with a pair of stoppers 76 and 77 having tilting surfaces 76a and 77a, respectively, the stoppers 76 and 77 being adjacent to the sensors 74 and 75. In addition, each of the tilting surfaces 76a and 77a of the stoppers 76 and 77 is formed to face the moving working pieces W as shown in Fig. 3, thereby preventing the running of the working pieces W.

Each of the supply and the discharge lines 61 and 71 is also provided with one pair of guide rails 80a, 80b and 81a, 81b, respectively, to thereby allow the working pieces W and the worked pieces to be guided into the upper portions of each pair of the bolts 62, 63 and 72, 73, respectively. The guide rails 80a, 80b, 81a and 81b are mounted parallel to the supply direction(the direction of the arrow "B") and the discharge direction(the direction of the arrow "A"), respectively, and a stepped up portion 82 is formed on each of the rails to thereby guide the peripheral surface of each of the working pieces W and the worked pieces.

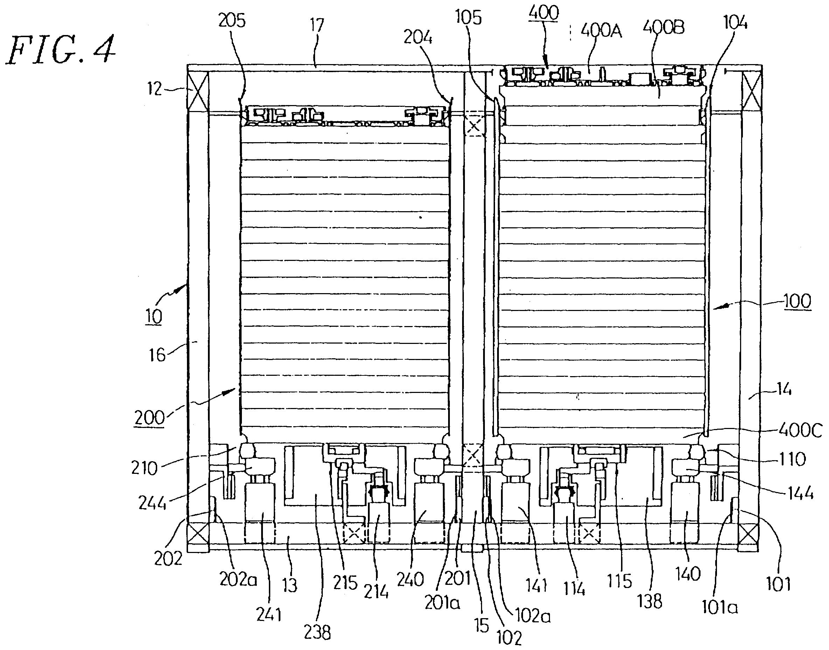

As shown in Figs. 1 and 4, at both sides of the front of the injection chamber 100, guide pads 101 and 102 having tilting surfaces 101a and 102a, respectively, are mounted to an end portion of a lower portion of the injection chamber 100, while a limit switch 103 is located at to the center portion of the injection chamber 100. Further, guide panels 104 and 105 are disposed on the inner walls of both sides of the injection chamber 100, respectively.

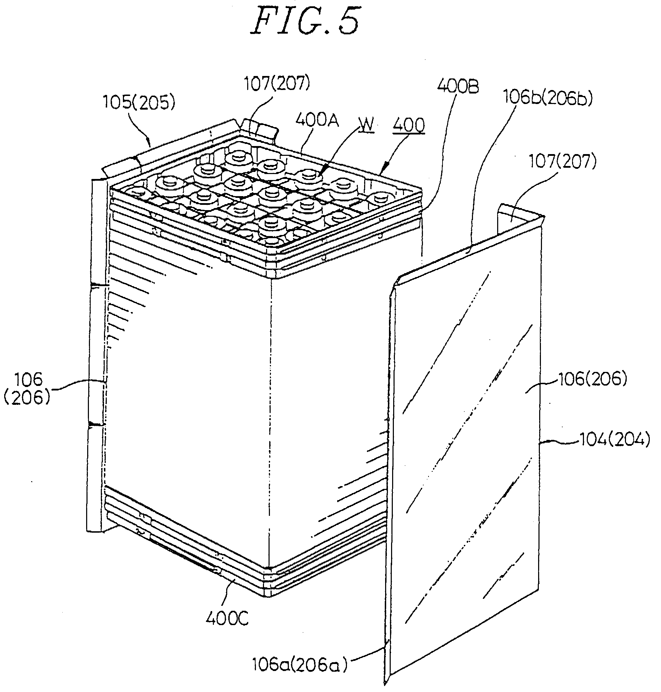

As shown in Figs. 4 and 5, the guide panels 104 and 105 include a guide surface 106 and a stop surface 107, wherein the guide surfaces 106, 107 are extended to form an "L" shape by means of a bending process, the guide surface 106 having tilting surfaces 106a and 106b at the front end and the top end thereof.

As best shown in Fig. 2, a post 108 is vertically disposed at the center of the rear portion of the injection chamber 100. The lower portion of the injection chamber 100 is provided with an injection means for transporting a plurality of trays 400 thereinto, each of the trays being loaded with the working pieces W.

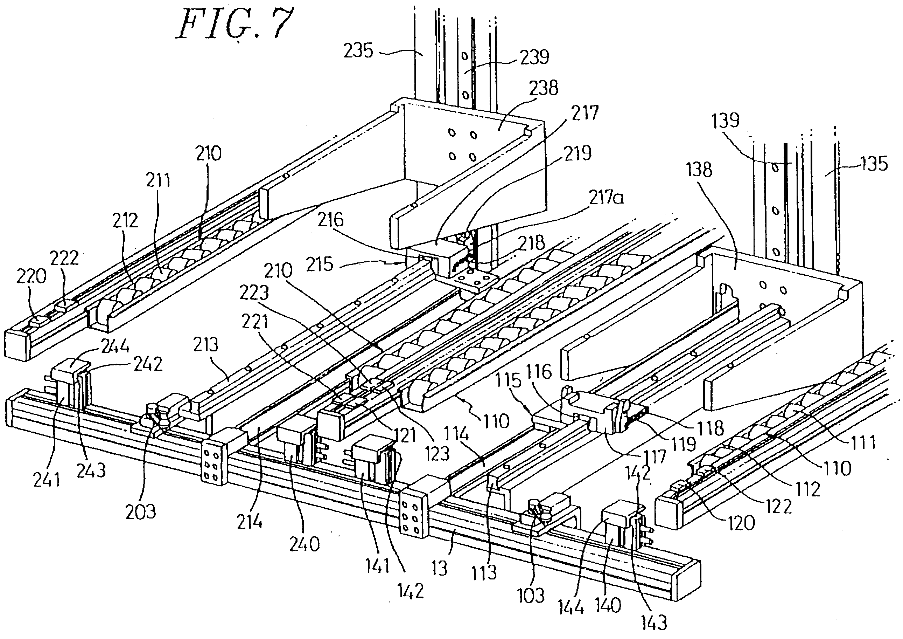

The injection means as shown in Figs. 4 and 7 includes a pair of straight rail portions 110 mounted on both sides of the injection chamber 100 to thereby transport the trays 400, each of the rail potions 110 being mounted into a bracket 112 parallel to each other and holding a number of freely rotating rollers 111. Further, disposed between the rail portions 110 is a guide rail 113 which is provided with a slider 115. The slider 115 moves back and forth, its motion being controlled by a cylinder 114 operated by using air pressure from the pneumatic control unit 30. Further, the slider 115 includes a body 117 mounted on the upper portion of a guide block 116 which is guided along the guide rail 113 and a pair of hooks 119 rotatably mounted on both sides of the body 117 and biasly connected to a pair of springs 118, wherein the hooks 119 may be operated by using a solenoid.

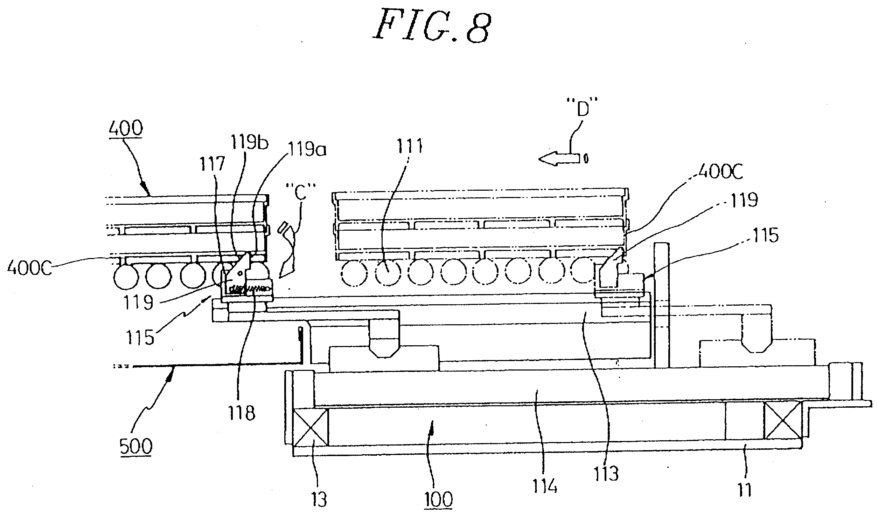

As shown in Fig. 8, the hook 119 has a pressing surface 119a contacting one side of the tray 400, the pressing surface 119a facing toward rear of the injection chamber 100 and its other side 119b is tilted. When the tilting surface 119b contacts the lower side surface of the tray 400, the hook 119 is rotated in the direction indicated by an arrow "C". At this time, the initial operating position of the slider 115 is set to the front of the injection chamber 100.

As shown in Fig. 7, a pair of sensors 120 and 121 are disposed on both sides of the front of the injection chamber 100 to thereby detect the presence of the trays 400 and another pair of sensors 122 and 123 are disposed adjacent to the sensors 120 and 121 to thereby detect the completion of the transporting of the trays 400.

Further, the auto tray changer in accordance with the present invention includes a first lifting means for lifting the trays 400 transported in the injection chamber 100 to the working chamber 300. The first lifting means, as shown in Figs. 2, 7 and 15, includes a driving motor 130 disposed at the center of the post 108 in the injection chamber 100, and a main pulley 132 mounted on an axis 131 of the driving motor 130. Sub pulleys 133 and 134 are located at an upper and a lower portions of the post 108 so as to vertically support the main pulley 132. A timing belt 135 is wound through the main pulley 132 and the sub pulleys 133 and 134.

Further, one portion of the timing belt 135 is fixed to the back surface of a carrier 138 which is disposed to reciprocate along a guide post 139. The guide post 139 is disposed on the inner side surface of the post 108. The initial operating position of the carrier 138 is sat to a lower portion of the injection chamber 100.

In such first lifting means, a chain may be used as the timing belt 135 and a rack and a pinion may be used for reciprocating the carrier 138.

On the other hand, the front of the injection chamber 100 is provided with a locking means. The locking means, as shown in Figs. 1, 4 and 7, includes cylinders 140 and 141 mounted on the upper surface of the lower frame 13 of the cabinet 10 to be actuated by the air pressure of the air pressure supply portion 30, the cylinders 140 and 141 being separated at a predetermined disatance from each other and each having a rod 142, respectively. A locker 144 having a locking groove 143 is mounted on the tip of the rods 142, where in the locking groove 143 is spaced from the front of the cylinders 140 and 141. In such locking means, the locker 144 may be operated by a solenoid.

As best shown in Fig. 2, a post 208 is vertically disposed at the center of the rear portion of the discharge chamber 200. The lower portion of the discharge chamber 200 is provided with a discharge means for transporting a plurality of trays 400 therefrom, each of the trays being loaded with the worked pieces.

The discharge means as shown in Figs. 4 and 7, similar to the injection means, includes a pair of straight rail portions 210 mounted on both sides of the discharge chamber 200 to thereby transport the trays 400, the rail potions 210 being mounted into a bracket 212 parallel to each other and holding a number of freely rotating rollers 211. Further, disposed between the rail portions 210 is guide rail 213 which is provided with a slider 215. The slider 215 is reciprocated by a cylinder 214 operated by using the air pressure from the pneumatic control unit 30. Further, the slider 215 includes a body 217 mounted on the upper portion of a guide block 216 which is guided along the guide rail 213, and a hook 219 rotatably mounted to both sides of the body 217, and being biasly connected to a spring 218, wherein the hook 219 may be operated by using a solenoid.

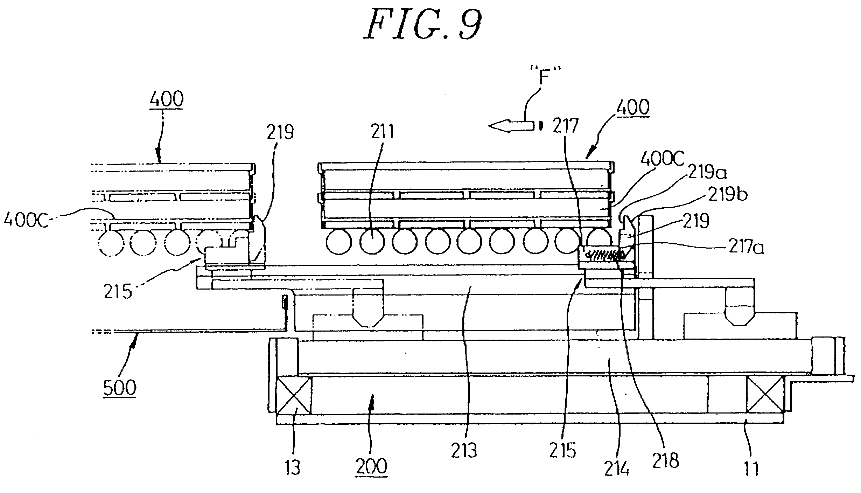

On the other hand, as shown in Fig. 9, the hook 219 has a pressing surface 219a contacting one side of a tray 400, the pressing surface 219a being mounted toward front of the discharge chamber 200. The hook 219 has a tilting surface 219b in the opposite direction of the pressing surface 219a. The hook 219 is engaged with a stepped portion 217a of the body 217 to thereby restrict the forward rotation therefrom. At this time, the initial operating position of the slider 215 is set to rear of the discharge chamber 200.

As shown in Fig. 7, a pair of sensors 220 and 221 are disposed on both sides of the front of the discharge chamber 200 to thereby detect the presence of the trays 400 and another pair of sensors 222 and 223 are disposed adjacent to the sensors 220 and 221 to thereby detect the completion of the transporting of the trays 400. Each of the sensors 220, 221, 222 and 223 bay consist of a conventional photo coupler.

Furthermore, the auto tray changer in accordance with the present invention includes a second lifting means for lifting down the trays 400 from the working chamber 300 to the discharge chamber 200. The second lifting means, as shown in Figs. 2 and 7, includes a driving motor 230 disposed at the center of the post 208 in the discharge chamber 200, and a main pulley 232 mounted on an axis 231 of the driving motor 230. Sub pulleys 233 and 234 are mounted at an upper and a lower portions of the post 208 so as to vertically support the main pulley 232. A timing belt 235 is wound through the main pulley 232 and the sub pulleys 233 and 234. A pair of idle pulleys 236 and 237 are mounted adjacent to the main pulley 232 so as to support the outer peripheral surface of the timing belt 235.

Further, one portion of the timing belt 235 is fixed to the back surface of a carrier 238 which reciprocates along a guide post 239. The guide post 239 is disposed on an inner side surface of the post 208(Fig. 3). The initial operating position of the carrier 238 is set to the upper portion of the discharge chamber 200.

In such second lifting means, a chain may be used as the timing belt 235 and a rack and a pinion may be used for reciprocating the carrier 238.

On the other hand, the front of the discharge chamber 200 is provided with a locking means. The locking means, as shown in Figs. 1, 4 and 7, includes cylinders 240 and 241 mounted on the upper surface of the lower frame 13 of the cabinet 10 to be actuated by the air pressure of the pneumatic supply unit 30, the cylinders 240 and 241 being separated by a predetermined distance from each other and each having a rod 242, respectively. A locker 244 having a locking groove 243 is mounted on the tip of the rods 242, wherein the locking groove 243 is spaced from the front of the cylinders 240 and 241. In such locking means, the locker 244 may be operated by a solenoid.

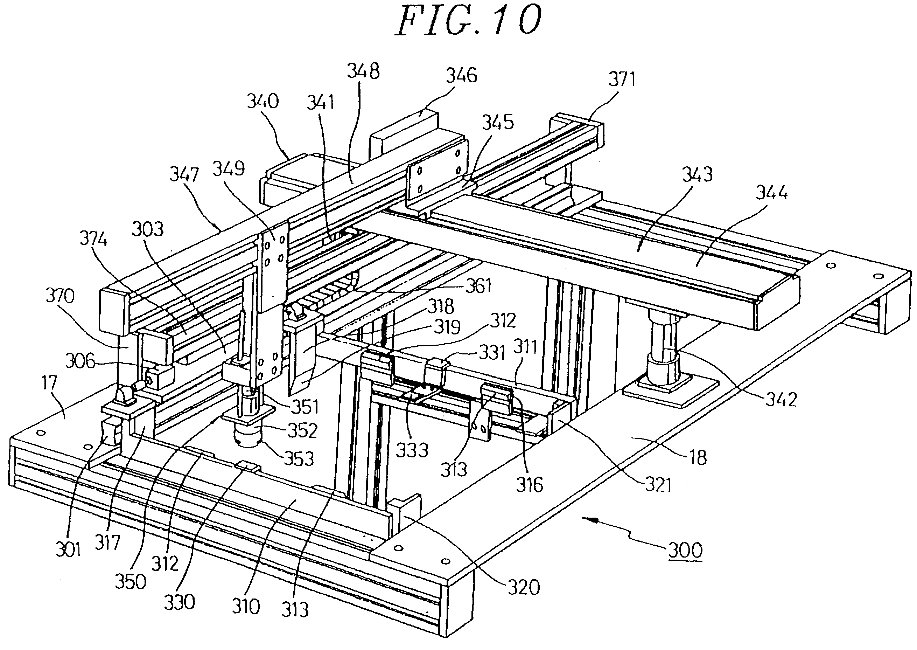

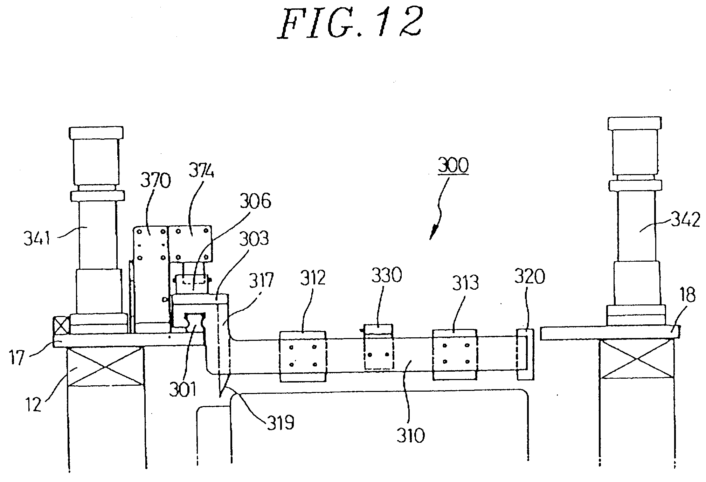

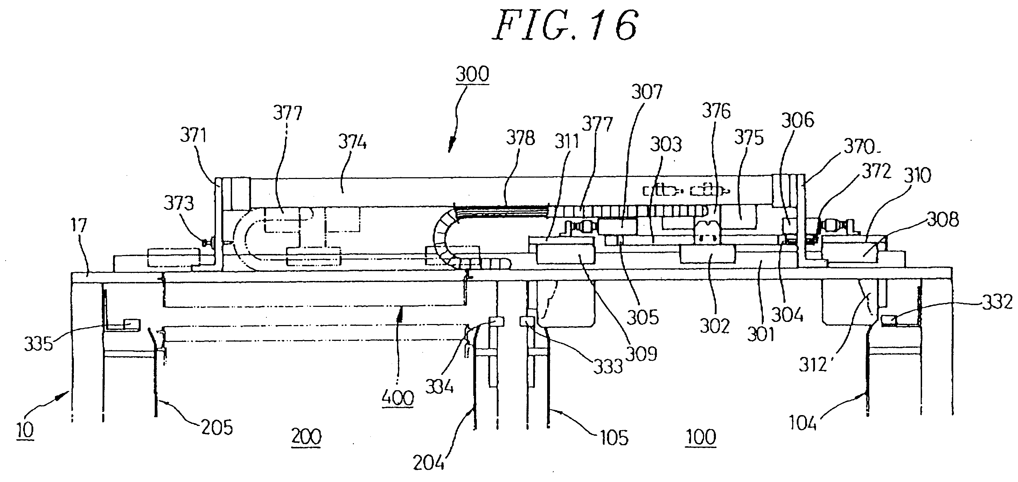

Referring now to Figs. 10 to 14 and 16, there are shown a clamping means including a guide rail 301 mounton to the upper surface of the base plate 17, on which a guide block 302 is reciprocated. Mounted on the upper side surface of the guide block 302 is a moving plate 303 on which a pair of stopper pins 304 and 305 are mounted at both tips thereof. Further, both aides of an upper portion of the moving plate 303 are provided with a pair of cylinders 306 and 307 operated by the air pressure of the pneumatic supply unit 30, respectively, thereby reciprocating a pair of guide blocks 308 and 309 by the operation of the cylinders 306 and 307.

A first and a second clamp plates 310 and 311 incorporating jaws 312 and 313 spaced at a predetermined distance with respect to each other therein are disposed at each tip of the guide blocks 308 and 309, respectively. The jaws 312 and 313 are fastened to the first and the second clamps 310 and 311 by means of screws.

On the other hand, each tip of the upper side surface of each of the jaws 312 and 313 is provided with a tilting surface 314 at an upper portion and a tilting surface 315 at a lower portion. A dented groove 315a is vertically formed between the tilting surfaces 314 and 315. Tilting surfaces 316 are formed on both sides of each of the jaws 312 and 313, respectively(Fig. 10).

Guide plates 317 and 318 parallel to each other are attached at the front of the first and the second clamp plates 310 and 311, respectively. A tilting surface 319 is formed on the inner surface of a lower portion, of each of the guide plates 317 and 318. Each tip of the rear of the first and the second clamp plates 310 and 311 is provided with a pair of support plates 320 and 321.

A pair of sensors 330 and 331 are disposed at an upper portion of the center of the first and the second clamp plates 310 and 311, respectively, to thereby detect whether the highest tray 400A is lifted up to a clamping position of the working chamber 300 or not.

Another pairs of sensors 332, 333 and 334, 335 are placed on both sides of an upper portion of the injection and the discharge chambers 100 and 200, respectively, the sensors being disposed adjacent to the tip of the lower portion of the jaws 312 and 313 mounted on the first and the second clamp plates 310 and 311. The two pairs of sensors 332, 333 and 334, 335 detect the position of the next trays 400B so as not to interrupt the highest tray 400A therewith. Each of the three pairs of sensors 330, 331 and 332, 333 and 334, 335 may use a well known photo coupler.

The working pieces loaded in the highest tray 400A are supplied into the numeric control machine by means of a robot 340. As shown in Figs. 1 to 3, 10 and 15, the robot 340 includes a vertical axis driving arm 343 having a pair of columns 341 and 342 disposed at the center of the base plates 17 and 18 of the cabinet 10, respectively, a guide rail 344 mounted at the top of each of the columns 341 and 342, a guide block 345 reciprocated on the guide rail 344, and a bracket 346 mounted at the top of the guide block 345, a horizontal axis driving arm 347 having a guide rail 348 mounted at one side of the bracket 346 by means of screws and a guide block 349 reciprocated at one side of the guide rail 348, and a tooling portion 350 having a cylinder 351 mounted at the lower end of the guide block 349, an air chuck 352 vertically lifted up and down by the cylinder 351, and a gripper 353 mounted on the lower portion of the air chuck 352 for gripping the working pieces. The cylinder 351 is subjected to an air pressure from the pneumatic supply unit 30.

At this time, the vertical axis and the horizontal axis driving arm 343 and 347 of, the robot 340 is actuated by the air pressure subjected from the pneumatic supply unit 30. A wire 362 is connected to the driving arms and arranged by drag chains 360 and 361, respectively.

When the working pieces W are loaded in the highest tray 400A by the robot 340, the tray 400A is transported through a shifting means into the upper portion of the discharge chamber 200.

As shown in Figs. 10, 11 and 16, the shifting means includes a pair of brackets 370 and 371, each of the brackets being horizontally mounted on the top of the base plates 17 of the cabinet 10, a cylinder 374 mounted on the top of each of the brackets 370 and 371, a guide block 375 mounted to the cylinder 374, and a slider 376 mounted on one side of the guide block 375 to be reciprocated. Further, the shifting means includes a pair of stoppers 372 and 373, each of the stoppers being mounted on the lower portion of each of the brackets 370 and 371. When a pair of stopper pins 304 and 305 of the moving plate 303 contact to the stoppers 372 and 373, respectively, the stoppers 372 and 373 interact a transporting distance of the moving plate 303. The slider 376 reciprocates along the guide rail 301. A wire 378 for the cylinder 374 may be arranged in a drag chain 377.

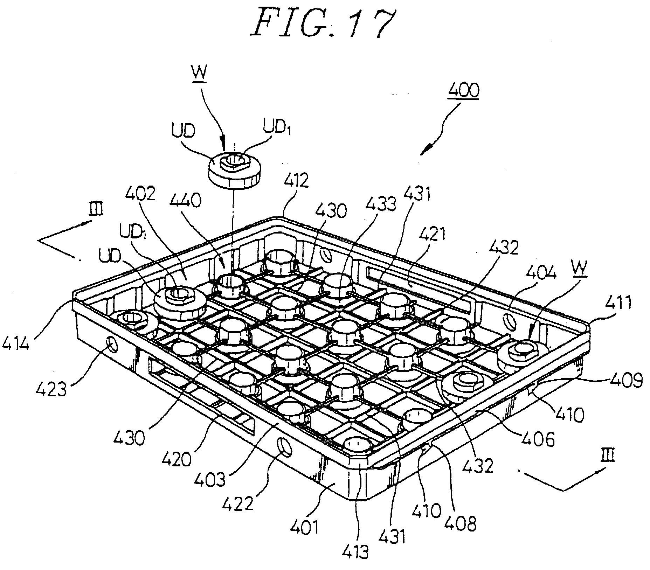

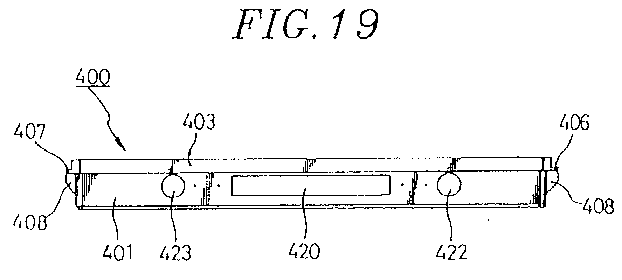

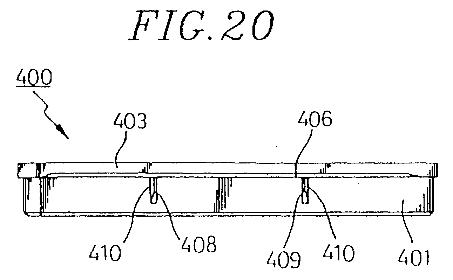

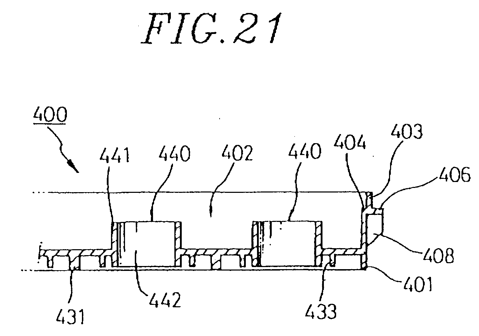

Referring first to Figs. 17 to 21, there is shown a preferable embodiment of the tray 400 for an upper drum UD in accordance with the present invention. As shown, the tray 400 includes a cavity 402 of a rectangular shape, a frame 401 formed on the periphery of the cavity 402 and having an edge 403 formed at the top of the frame 401, a stepped portion 404 formed around the inner surface of edge 403, a pair of outer rims 406 and 407 formed along the outer surface of the shorter pair of parallel sides of the rectangular edge 403, a horizontal and a vertical girders 430 and 431 forming a lattice pattern by crossing each other inside the cavity 402, a plurality of support bars 432 crossed in the lattice pattern, and a plurality of mounting portions 440 for mounting the working pieces at each of the cross points of the support bars 432. Further, the tray 400 is provided with a pair of support ribs 408 and 409, the ribs being separated at a predetermined distance from each other and mounted on the outside surface of the frame 401 to support the rims 406 and 407.

On the other hand, the edge 403 is provided with a pair of rounded corners 411 and 412 in one side thereof and a pair of chamfered corners 413 and 414 in the other side thereof to thereby ensure all the trays 400 being stacked in exactly the same way.

A pair of windows 420 and 421 are formed in a pair of facing sides of the frame, one on each side, respectively, and two pairs of hanger holes 422 and 423 are formed on both sides of each of the windows 420 and 421. When the worked pieces are washed, hangers (not shown) of a washer(not shown) are inserted through the hanger holes 422 and 423, thereby transporting the trays 400 into the washer by the operation of the hanger.

A flange portion 433 having a circular shape is mounted on the bottom of the tray 400, wherein the center of the flange portion 433 coincides with the the cross point of the support bar 432.

Each mounting portion 440 further includes a boss 441 having a hollow portion 442, the boss 441 being positioned inside of the flange portion 433, allowing a flange portion UD1 of the upper drum UD to be inserted into the hollow portion 442 of the boss 441.

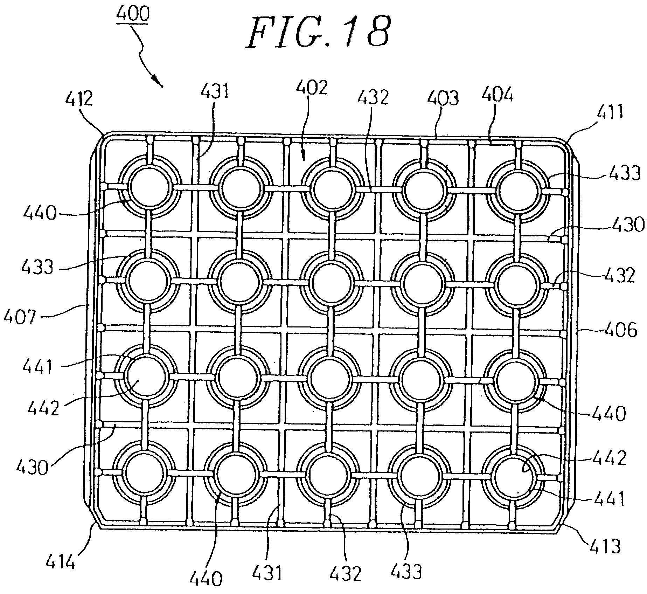

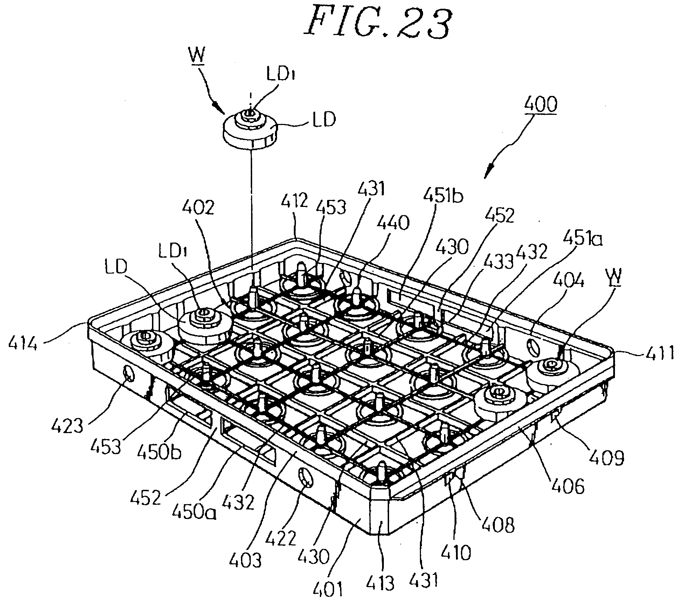

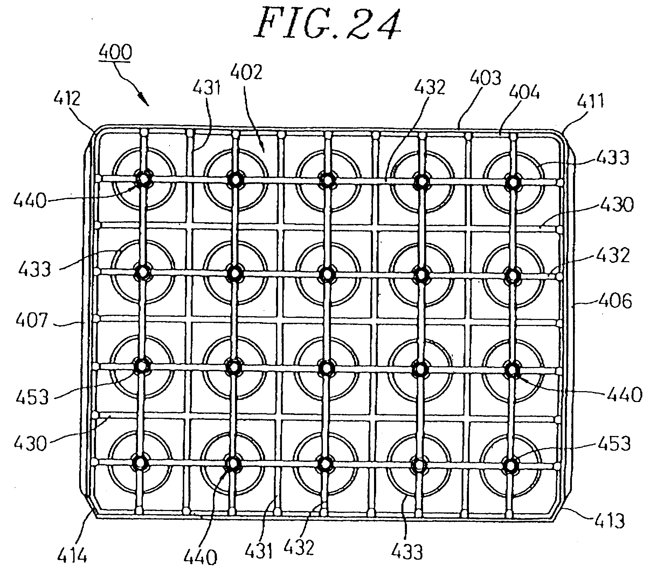

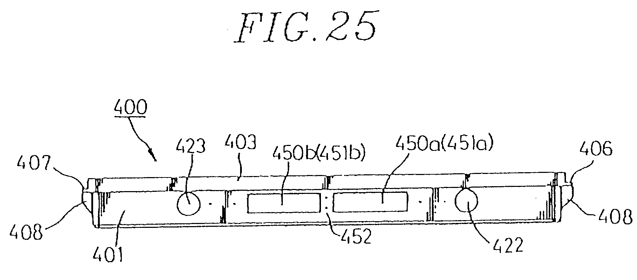

Referring to Figs. 23 to 26, wherein like reference characters designate like or corresponding parts through Figs. 18 to 22, there is shown a preferable embodiment of the tray 400 for a lower drum in accordance with the present invention. As shown, the tray 400 includes an indicating portion 452 for dividing each of the windows 450 and 451 into two pairs of windows 450a, 450b and 451a, 451b.

The mounting portions 440 further include a hub 453 axially mounted on each of the cross points of the support bars 432, the outer diameter of the hub 453 being formed to allow the hub axis 453 to be inserted into an axis hole LD1 of the lower drum LD. It is preferable that the trays may be made of polyphenylene sulfide resin(PPS).

The operation of the auto tray changer in accordance with the present invention is as follows:

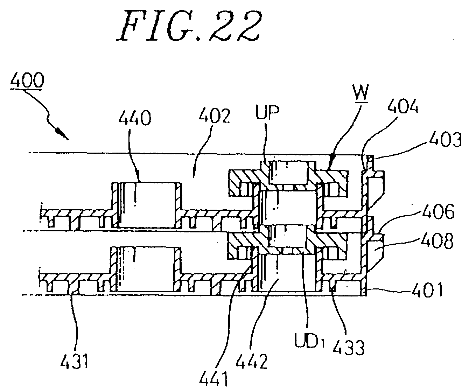

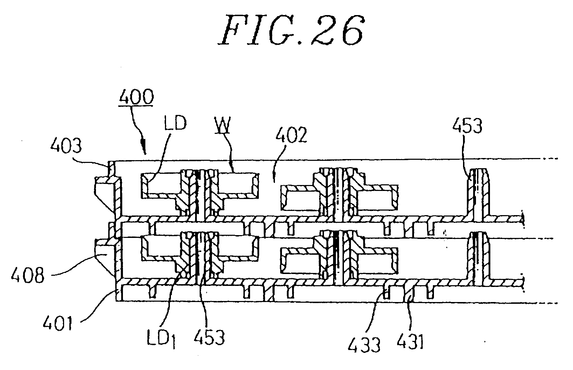

First of all, the working pieces for an upper and a lower drums, respectively, are loaded in the tray. At this time, in case of the working pieces for the upper drum, the bottom part of the flange portion UD1 of the upper drum UD is inserted into the hollow portion 442 of the boss 441 in the tray as shown in Fig. 22. On the other hand, in case of the working pieces for the lower drum, the hub axis 453 in the tray is inserted into the axis hole LD1 of the lower drum LD as shown in Fig. 26.

After loading, a plurality of the trays 400, e.g., twenty trays, are stacked on a loading porion(not shown) of a truck 500(Fig. 8), which is disclosed in a greater detail in a co-pending, commonly owned application, U.S. Ser. No. entitled "TRUCK FOR USE IN AN AUTO TRAY CHANGER", which is incorporated herein by reference. In stacking, it is preferable that a window side of each tray may be exposed at the front of the truck 500. That is, in case of the trays 400 for the upper drums UD, either one of the windows 420 and 421 is exposed, while in case of the trays 400 for the lower drum LD, either pair of the windows 450a, 450b and 451a, 451b divided by the indicating portion 452 are exposed, thereby making it easy to check the tray loads to ensure an accurate and continuous supply of the working pieces for the upper and the lower drums into the respective machining lines.

A truck 500 stacked with the trays 400 loaded with the working pieces as described above will be brought to the injection chamber 100 of the auto tray changer, whereas an empty truck 500 will be moved to the discharge chamber 200. Then, both sides of a loading portion of the truck 500 contact each of the guide pads 101 and 102 at the injection chamber 100 and each of the guide pads 201 and 202 at the discharge chamber 200. Further, a front wall portion(not shown) of the truck 500 contact each of the limit switches 103 at the injection chamber 100 and 203 at the discharge chamber 200 to thereby actuate each of the cylinders 140 and 141 at the injection chamber 100, and 240 and 241 at the discharge chamber 200 in accordance with the operation of the control unit 40. As a result, the front wall porion of the truck is clamped to the locking groove 143 by means of the locker 144 at the injection chamber 100 and to the locking groove 243 by means of the locker 244 at the discharge chamber 200, thereby preventing the truck from moving and separating from the chambers.

At the injection chamber 100, the sensors 120 and 121 detect whether the trays are stacked on the loading portion of the truck 500 or not.

Then, as shown in Fig. 8, the cylinder 114 is actuated by the control unit 40 so that the slider 115 is transported along the guide rail 113 in the direction of the arrow "D". At the same time, when the tilting surface 119b of the hook 119 contacts one side of frame 401, the hook 119 is rotated toward the arrow "C".

When the slider 115 is further transported until the hook 119 reaches the cavity 402 of the frame 401, the hook 119 is restored to its original position by the restoring force of the spring 118. As a result, the pressing surface 119a of the hook 119 is hooked to the inner portion of the frame 401 and the slider 115 is restored to its original position by the operation of the cylinder 114, thereby transporting the stacked trays 400 into the inner portion of the injection chamber 100. The frame 401 of the tray 400 is transported on the rail portion(not shown) of the truck 500 and the rail portion 110 of the injection chamber 100, and the tilting surfaces 106a of the guide panels 104 and 105 guide the trays 400.

When the trays 400 are transported into the injection chamber 100, the sensors 122 and 123 detect whether the transporting of the trays 400 is completed or not.

Sequentially, the driving motor 130 controlled by the control unit 40 rotates the main pulley 132, which ,in turn, rotates the timing belt 135 through the sub pulleys 133 and 134. Then, the carrier 138 is lifted up to the working chamber 200 along the guide rail 139, thereby lifting up the trays 400, since the tray 400c located at the bottom of the tray stack is supported by the carrier 138 as shown in Fig. 4.

Further, as shown in Fig. 5, as both sides and the rear portion of the trays 400 are supported by the guide surfaces 106 and the stop surfaces 107 of each of the guide panels 104 and 105, the trays 400 are securely lifted up. The trays 400 are guided into the tilting surface 319 of each of the guide plates 317 and 318.

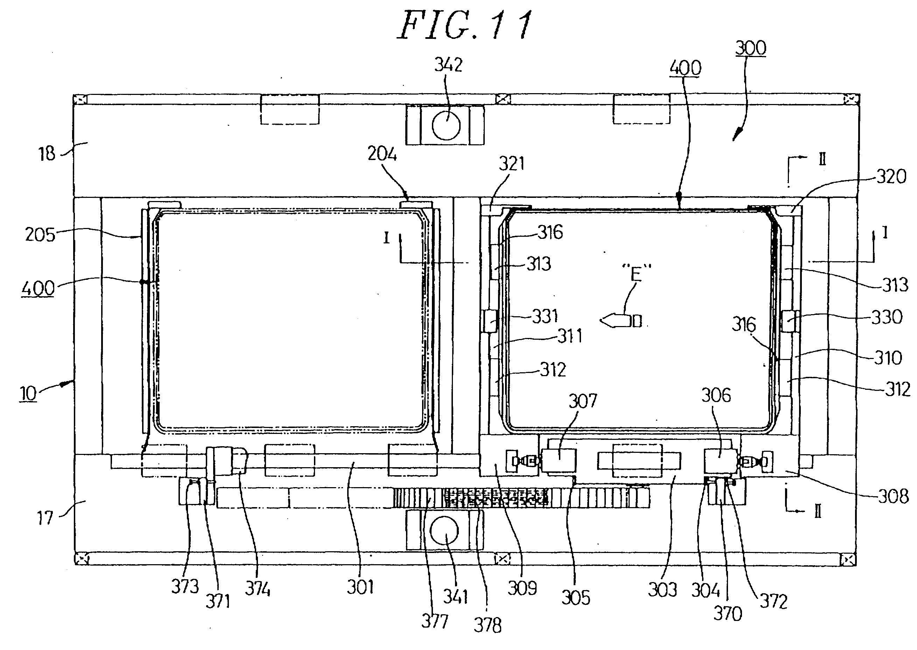

As best shown in Fig. 11, when the tray 400A located at the top of the stack is lifted up toward the working chamber 300, each of the sensors 330 and 331 mounted at the center of the upper portion of each of the clamp plates 310 and 311 detects whether the tray 400A has reached the clamping position of the working chamber 300 or not.

When the tray 400A reaches the clamping position, the cylinders 306 and 307 are actuated by the control unit 40 so that the guide blocks 308 and 309 are transported toward the moving plate 303 along the guide rail 301. As a result, the guide blocks 308 and 309 approach closer to each other.

At the same time, the clamp plates 310 and 311 are transported and the lower side of each of the rims 406 and 407 is supported by the upper side of each of the jaws 312 and 313 so that the tray 400A located at the top of the stack is clamped.

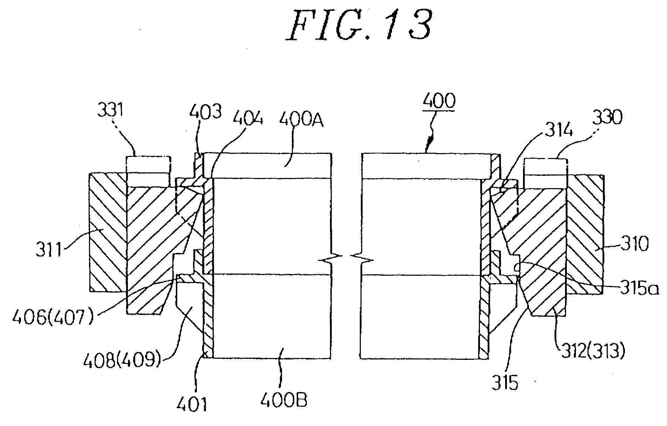

Further, as shown in Fig. 13, the tilting surface 314 of each of the jaws 312 and 313 prevents an interaction between the jaws 312 and 313 and the stepped portion 405 of the edge 403 from occurring. Similarly, the tilting surface 315 of each of the jaws 312 and 313 prevents an interaction between the jaws 312 and 313 and the edge 403 of the next tray 400B from occurring. Also, the dented groove 315a of the tilting surface 351 prevents an interaction between the tip ends of each of the rims 406 and 407 from occurring.

Furthermore, the tilting surface 316 of each of the jaws 312 and 313 contacts the tilting surface 410 of each of the support ribs 408 and 409, thereby clamping the tray 400A which will, in turn, prevent the tray 400A from moving.

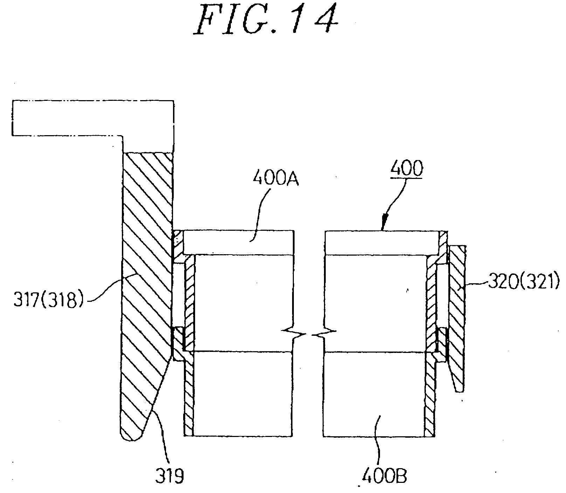

On the other hand, as shown in Fig. 14, the guide plates 317, 318 and the support plate 320, 321 secure the front and the rear portions of the tray 400A located at top of the stack, thereby clamping the tray 400A which will, in turn, prevent the tray 400A from moving.

When the tray 400A is clamped, the sensors 332 and 333 detect the position of the tray 400A. Then, the driving motor 230 is actuated by the control unit 40 so that the carrier 308 is lifted dawn by one pitch, thereby preventing the tray 400A from coming in contact with the next tray 400B.

As shown in Fig. 3, the robot 340 transports the working pieces loaded in the tray 400A into the supply line 61 of the conveyer system 60.

At the same time, based on a loading position of the working pieces, the vertical axis driving arm 343 is actuated to allow the guide block 345 to move along the guide rail portion 344 in the vertical direction, which will, in turn, set the vertical position of the tooling portion 350. At the same time, the horizontal axis driving arm 347 is actuated in such a way that the guide block 349 moves along the guide rail portion 348 in the horizontal direction, which will, in turn, set the horizontal position of the tooling portion 350 thereof.

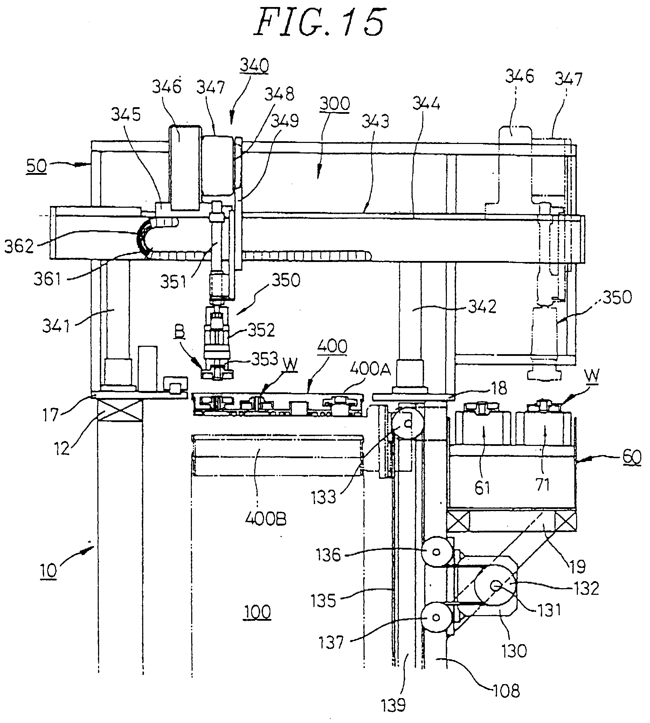

As described above, when the tooling portion 350 is positioned at the loading position of the working piece, the cylinder 351 of the tooling portion 350 is actuated as shown in Fig. 15, operating the air chuck 352. As a result, the gripper 33 grips the working piece. The gripped working piece then is transported by the operation of the vertical and horizontal axis driving arms 343 and 347 through the supply line 61 of the conveyer system 60 into the numeric control unit M. At the timer the sensors 64 and 65 of the supply line 61 detect the position of the working piece thereon.

The working piece positioned on the supply line 61 is guided into the guide rails 80a and 80b.

On the other hand, the worked piece C is discharged from the numeric control machine M through the discharge line 71 of the conveyer system 60 and guided by the guide rails 80a and 80b.

When the worked piece C transported along the discharge line 71 contacts the stoppers 76 and 77, it stops. The sensors 74 and 75 detect the position of the worked piece C stopped by the stoppers 76 and 77.

Sequentially, the tooling portion 350 regrips the worked piece C under the control of the control unit 40, and then loads the worked piece C in the tray 400A located at top of the stack at its original position. Thereafter, the cylinder 374 is actuated so that the guide block 375 is transported and the slider 376 is transported along the guide rail 301.

When the moving plate 303 is transported by the transporting of the slider 376, the clamp plates 310 and 311 are horizontally transported on the upper portion of the discharge chamber 200 as shown by the arrow "E". The stopper pin 304 of the moving plate 303 contacts the stopper 373 of the bracket 371 so that the clamp plates 310 and 311 are positioned on the upper portion of the discharge chamber 200.

When the clamp plates 310 and 311 are positioned on the upper portion of the discharge chamber 200, the respective clamp plates 310 and 311 are transported in the opposite direction by each of the cylinders 306 and 307, which will, in turn, release the clamped tray 400A located at top of the stack. At this time, the tray 400A is supported by the carrier 238 of the discharge chamber 200.

Under this condition, the driving motor 230 is actuated under the control of the control unit 40, rotating the main pulley 232, rotating the timing belt 235 through the sub pulleys 233 and 234.

At the same time, the carrier 238 is lifted down by one pitch along the guide rail 239, preventing an interaction between the tray 400A and the clamp plates 310 and 311 from occurring. The sensors 334 and 335 detect the lifted down position of the tray 400A on the carrier 238.

As the frame 401 off the tray 400A is guided by the tilting surface 206b of the guide panels 204 and 205 and the front and the rear surfaces thereof are supported on the guide surface 206 and the stop surface 207 of the guide panels 204 and 205, respectively, the tray 400A is steadily lifted down.

When the carrier 238 of the discharge chamber 200 is lifted down by one pitch, the cylinder 374 is actuated under the control of the control unit 40 to thereby transport the clamp plates 310 and 311 are transported into the injection chamber 100. When the stopper pin 304 of the moving plate 303 comas into a contact with the stopper 372 of the bracket 371, the clamp plates 310 and 311 are exactly positioned on the injection chamber 100.

Each of trays 400 from the injection chamber 100 is stacked on the carrier 238 of the discharge chamber 200 by repeatedly performing the above operation.

The trays 400 are steadily stacked onto ont top of another as the front of the trays 400 stacked on the carrier 238 of the discharge chamber 200 is guided into the tilting surface 319 of each of the guide plates 317 and 318 and the guide panels 204 and 205.

In order to confirm whether the stacking of the trays 400 is completed or not, the sensors 220 and 221 detect the position of the tray 400C located at the bottom of the stack. When the carrier 238 is positioned on the lower portion of the discharge chamber 200 and the frame 401 of the tray 400C is supported on the roller 211 of the rail portion 210.

Under this condition, as shown in Fig. 9, the cylinder 214 of the discharge chamber 200 is actuated under the control of the control unit 40 to allow the slider 215 to be transported along the guide rail 213 in the direction of the arrow "F". At the same time, the pressing surface 219a of the hook 219 is engaged with one side of the frame 401 and the tray 400C is discharged along the rail portion 210 of the discharge chamber 200 into the loading portion(not shown) of the truck 500.

The sensors 222 and 223 detect whether the trays 400 are completely transported into the loading portion of the truck 500 or not.

When the trays 400 are transported into the loading portion of the truck 500, each of the cylinders 140 and 141, and 240 and 241 in each of the injection and the discharge chambers 100 and 200 is actuated under the control of the control unit 40 to allow each of the lockers 144 and 244 to be lifted up, releasing the locking condition of the truck 500.

A worker removes the truck 500 for stacking the trays 400 from the discharge chamber 200, moves the empty truck 500 located in the injection chamber to the discharge chamber 200, and places a new truck for stacking the trays loaded with the working pieces to the injection chamber 100.

As stated above, the auto tray changer in accordance with to the present invention is capable of repeatedly performing the machining process of the working piece. Further, in washing the trays 400 loaded with the worked pieces, the hanger of the washer is inserted into the hanger holes 422 and 423, thereby allowing an easy transport of the trays 400. Moreover, as the cavity 402 of each of the trays 400 is provided with a lattice pattern formed by the horizontal and the vertical girders 430 and 431 and the support bars 432, the washing of the worked pieces can be effectively performed.

Although the invention has been shown and described with respect to the preferred embodiments, it will be understood by those skilled in the art that certain changes and modifications may be made without departing from the scope of the invention as defined in the following claims.

## Claims

1. An auto tray changer for sequentially charging working pieces loaded in a plurality of trays, the trays being stacked on a delivery means, into a numeric control machine and sequentially discharging worked pieces from the numeric control machine into the plurality of trays the changer comprising:
a cabinet having an injection chamber, a discharge chamber and a working chamber;
an injection means for injecting the plurality of trays stacked on the delivery means into the injection chamber;
a first lifting means for lifting the stacked trays in the injection chamber to the working chamber in such a way that a tray located on top of the stack is located at a clamping portion of the working chamber;
a robot for sequentially charging the working pieces into the numeric control machine from the tray in the clamping portion in the working chamber and discharging the worked pieces into the same;
a shifting means for shifting the tray reloaded with the worked pieces into a discharging portion of the working chamber located above an upper portion of the discharge chamber;
a second lifting means for lowering the shifted tray into the discharge chamber in such a way that the trays loaded with worked pieces are stacked in a reverse order from the stacked trays; and
a discharge means for discharging the stack of the trays loaded with the worked pieces into the delivering means.

2. The changer of claim 1, wherein the cabinet includes an upper frame, a lower frame, a plurality of vertical frames connected to the upper and the lower frames, and a pair of base plates horizontally mounted at front and rear of the upper frame.

3. The changer of claim 1 or 2, wherein each of the injection and discharge chambers has a post vertically mounted at a center of a rear portion thereof, a pair of pads mounted at front thereof for guiding the delivering means, a pair of limit switches mounted at front thereof for actuating when the delivering means comes into a contact therewith, a guide surface and a stop surface, the guide and stop surfaces having an "L" shape, and the guide surface being provided with a pair of tilting surfaces at a tip end of front thereof.

4. The changer of one of claims 1-3 , wherein the working chamber is located on top of the injection and discharge chambers and having a chassis, a panel made of a transparent material and mounted to the chassis, and a door mounted on front of the casing for identifying an operating condition in the working chamber.

5. The changer of any preceding claim, further comprising a supplying means including a pair of frames horizontally mounted at the upper portion of rear of the cabinet, a conveyer system consisting of a supply line and a discharge line mounted at an upper portion of each of the frames for supplying and discharging working pieces and worked pieces, respectively, each of the supply and the discharge lines having a pair of belts mounted at a predetermined distance from each other for transporting the working and the worked pieces thereon, a pair of first sensors located at a predetermined position on each of the supply and the discharge lines for detecting a position of the working and the worked pieces, and a pair of guide rails for guiding the working pieces and the worked pieces into the upper portion of the belts, the respective guide rails being provided with a stepped portion for supporting a periphery surface of each of the working pieces and the worked pieces and the discharge line including a pair of stoppers, each having a tilting surface adjacent to each of the first sensors, the tilting surface being formed toward a discharging direction of the worked pieces.

6. The changer of any preceding claim, further comprising a pneumatic supply portion mounted at the lower portion of a rear surface of the cabinet, the pneumatic supply portion having a micro filter for removing contaminants in air, a pressure controller mounted on the micro filter for uniformly maintaining an operating pressure of air, a manifold unit connected to the pressure controller for controlling a flow of air, a plurality of wires operated as discharge lines thereof and a harness bracket mounted at a lower portion of the vertical frames of the cabinet for accommodating the wires.

7. The changer of any preceding claim , further comprising a control unit having a control box mounted on one side of the cabinet, a control panel disposed to an upper portion of the control box, and a lamp disposed on an upper portion of the control panel.

8. The changer of any preceding claim , wherein each of the injection and the discharge means includes a pair of rail portions, each being disposed on both sides of the injection chamber and the discharge chamber, a guide rail disposed between the rail portions, a pair of second sensors mounted on both front sides of the injection and the discharge chambers, respectively, for detecting the presence of the trays, a pair of third sensors mounted adjacent to the pair of second sensors for detecting whether the tray injection and discharge are completed, a cylinder mounted adjacent to the guide rail, and a slider for reciprocating along the guide rail by the cylinder, the slider including a guide block slidably mounted on the guide rail, a body mounted on the guide block, a pair of hooks rotatably mounted on both sides of the body, each of the hook having a pressing surface for contacting to one side of the trays, and a spring for biasing the hooks.

9. The changer according to claim 8, wherein the pressing surface of the injection means is faced toward a rear portion of the injection chamber.

10. The changer according to claim 8, wherein the pressing surface of the discharge means is faced toward a front portion of the discharge chamber.

11. The changer of any preceding claim, wherein each of the first and the second lifting means includes a driving motor mounted at a center of the post in the injection and the discharge chambers, a main pulley mounted on an axis of the driving motor, a pair of sub pulleys, each being mounted at an upper and a lower portions of the post to be vertically maintained to the main pulley, a timing belt wound around the sub pulleys and the main pulley, and a carrier reciprocating along a guide rail by driving the driving motor, the guide rail being positioned on an inner portion of the post, one end of the timing belt being fixed to a back surface of the carrier.

12. The changer of any preceding claim, further comprising a clamping means including a moving plate mounted to be reciprocated along a guide rail which is disposed on the base plate of the cabinet, a pair of stopper pins mounted to both tip ends of the moving plate, a pair of clamp plates, each being mounted to be reciprocated by an operation of a cylinder which is disposed on the top side of the moving plate, a pair of guide plates for guiding a front portion of the trays, each of the guide plates being mounted on a front inner surface of the clamp plates, a bottom inner surface of each of the guide plate being provided with a tilting surface, a pair of support plates for supporting the tray located at top of the stack, each of the support plates being mounted on a rear end portion of the clamp plates, a pair of fourth sansors for detecting whether the tray located at top of the stack is located at a clamping position of the working chamber or not, the fourth sensors being mounted at top of the clamp plates, a pair of jaws spaced at a predetermined distance from each other, each of the jaws having a tilting surface formed at an upper surface thereof and a recess groove formed at a center of the tilting surface and being mounted to an inner surface of the clamp plate for clamping the tray located at top of the stack, and a pair of fifth sensors for detecting a position of a next tray to not to to interact the tray located at top of the stack, each of the pair of fourth and fifth sensors being mounted on top of the injection and the discharge chambers and adjacent to bottom of the end portion of the jaws, respective.

13. The changer of any preceding claim, wherein the robot includes a vertical axis driving arm having a pair of columns disposed at a center of the base plates of the cabinet, respectively, a guide rail mounted at top of the columns, a guide block reciprocated on the guide rail, and a bracket mounted at top of the guide block; a horizontal axis driving arm having a guide rail mounted at one side of the bracket and a guide block reciprocated at one side of guide rail; and a tooling portion having a cylinder mounted at lower end of the guide block of the horizontal axis driving arm, an air chuck vertically lifted up and down by the cylinder, and a gripper mounted at a lower portion of the air chuck for gripping the working pieces.

14. The changer of any preceding claim, wherein the shifting means includes a guide rail horizontally mounted on top of base plate of the cabinet, a pair of brackets, each of the brackets being mounted on both sides of top of the guide rail, a pair of stoppers, each of the stoppers being mounted at a lower portion of each of the brackets for interacting a transporting distance of the moving plate of the clamping means, a cylinder mounted at top of the brackets, a guide block mounted on the cylinder, and a slider reciprocated along the guide rail at one side of the guide block.

15. The changer of any preceding claim, wherein the trays are made of polyphenylene sulfide resin and include a cavity having a rectangular shape, a frame having an edge formed on a periphery of the cavity, the edge with a pair of rounding portions at each corners of one side thereof and a pair of chamfers at each corners of another side thereof, a pair of stepped portions formed on one sides of the edge, and a pair of rims formed on another sides of the edge, a window formed on each side of the frame, a pair of hanger holes formed to both sides of the window, a pair of support ribs mounted at a predetermined length from a side of the frame and a lower portion of the rims, a horizontal and vertical girder forming a lattice pattern by crossing each other from the inner space of the cavity, a plurality of support bars crossed in the lattice pattern, a flange portion having a circular shape mounted at a lower portion of the cross points of the support bar, and a plurality of mounting portions for mounting the working pieces into each of the cross points of the support bars.

16. The changer according to claim 15, further comprising an indicating portion for dividing the window into a pair of windows.

17. The changer according to claim 15, wherein the respective mounting portions further include a boss having a hollow portion, the boss being positioned at an inside of the flange portion and extended downward from the support bars to be fixed by inserting an upper portion of the flange into a lower portion of the hollow portion, the inner diameter of the boss being formed to be inserted a flange portion of an upper drum into the boss.

18. The changer according to claim 15, wherein the mounting portions further include a hub axially mounted at each of the cross points of the support bars, the outer diameter of the hub being formed to be inserted into an axis hole of an lower drum into the hub.

19. The changer of any preceding claim , further comprising a locking means including a pair of cylinders mounted on the upper surface of the lower frame of the cabinet to be actuated by an air pressure of the pnematic supply unit, the cylinders being uniformly spaced apart and having a pair of rods, and a locker having a locking groove and mounted on the tip end of the rods, the locking groove being spaced from front of the cylinders.
